# EUROPEAN PATENT SPECIFICATION

(11) **EP 2 481 184 B1**
(45) Date of publication and mention of the grant of the patent: **28.02.2018**
(21) Application number: 10765504.5
(22) Date of filing: 17.09.2010
(51) Int. Cl.: H04L 9/08, H04L 29/06

(54) **A METHOD AND A SYSTEM FOR PROVIDING A DEPLOYMENT LIFECYCLE MANAGEMENT OF CRYPTOGRAPHIC OBJECTS**
VERFAHREN UND SYSTEM ZUR BEREITSTELLUNG EINES EINSATZLEBENSZYKLUSMANAGEMENTS FÜR KRYPTOGRAPHISCHE OBJEKTE
PROCEDE ET SYSTEME POUR ASSURER UNE GESTION DE CYCLE DE VIE DU DEPLOIEMENT D'OBJETS CRYPTOGRAPHIQUES

(30) Priority: 25.09.2009 EP 09171408
(43) Date of publication of application: 01.08.2012
(73) Proprietor: International Business Machines Corporation, Armonk, NY 10504 (US)
(72) Inventor: HAAS, Robert, CH-8803 Rueschlikon (CH); HU, Xiaoyu, CH-8803 Rueschlikon (CH); ILIADIS, Ilias, CH-8803 Rueschlikon (CH); PAWLITZEK, Rene A., CH-8803 Rueschlikon (CH); VUKOLIC, Marko, F-06220 Golfe Juan (FR)
(74) Representative: Klett, Peter Michael
(86) International application number: PCT/IB2010/054215
(87) International publication number: WO 2011/036616

(56) References cited:
- WO-A2-01/06727
- WO-A2-01/54374
- WO-A2-2008/042318
- US-A- 6 108 788
- US-A1- 2004 022 390

## Description

The present invention relates to a method and a system for providing a deployment lifecycle management of cryptographic objects in particular cryptographic keys consumed by key use entities of a network.

Key management is a process by which cryptographic keys are created according to appropriate policies and delivered to units that consume these keys for different applications. Cryptographic keys are possibly deleted at the end of their lifecycle.

The management of cryptographic objects CO such as cryptographic keys or certificates, in particular the deployment and distribution of cryptographic objects are managed in conventional systems mostly by humans. This kind of manual operations for deployment and distribution of cryptographic objects is highly error prone. Specifically there is no assurance that all necessary cryptographic objects are properly deployed and distributed to the precise locations or units where they are needed and no assurance that existing cryptographic CO deployment exposes no risks. This is because in a typical enterprise or organization key management system may involve a plurality of cryptographic objects such as cryptographic keys or cryptographic certificates, wherein most of these cryptographic objects are updated or refreshed regularly and where exist a plurality of key deployment points. Thus in a conventional system the management task of timely and efficiently distributing cryptographic objects is inherently complicated and error prone.

US2004022390 (A1) provides a method for secure exchange of data objects over a computer network. The method includes the steps of identification, authentication and authorization of an originating user, and determination of the originating user's credentials. Object and network cryptographic keys and materials are assigned to the originating user based on the originating user's credentials.

WO2008042318 (A2) provides a system for management of secure networks including at least one management server constructed and configured for communication through network channels to at least one point on the network including remote communication device(s) operating from policy enforcement point (PEP)s, each having at least one key generated and distributed by at least one key authority point (KAP) with associated policies provided by a management and policy (MAP) server to ensure secure association within the network. Another aspect of this document provides methods for distributing keys to end point communication devices through network channels including providing a server-based key management system from a server on the network, the server distributing keys to authenticated devices requesting secure access to the network, wherein the keys are distributed through previously authenticated authorized PEPs that provide for cross-communication with each other by operating on secured channels within the network.

An aspect of the invention provides in an embodiment a system for deployment lifecycle management comprising
at least one execution unit for running asynchronously a deployment process for providing deployment specifications for cryptographic objects (CO) and a distribution process for executing deployment related operations in response to CO deployment specifications recorded in a persistent data store.

In an embodiment of the system according to the present invention an interface is provided for receiving at least one CO deployment specification which indicates a deployment of one or more cryptographic objects to one or more key use entities according to a predetermined deployment pattern.

In an embodiment of the system according to the present invention that CO deployment specification comprises
an indication for adding of a cryptographic object to a key use entity or for deleting a cryptographic object from a key use entity of a network,
an indication for transmitting a cryptographic object to a key use entity of the network in response to an application requirement,
an indication for updating (or refreshing) an existing cryptographic object used by a key use entity or for updating one or more of the attributes of that cryptographic object.

In an embodiment of the system according to the present invention the CO deployment specification is provided by a key management system or input by a user into that system for deployment lifecycle management.

In an embodiment of the system according to the present invention the deployment process runs on that execution unit comprises
a validation of the received CO deployment specification against a predetermined security policy.

In an embodiment of the system according to the present invention the distribution process runs on said execution unit comprises
execution of each validated CO deployment specification recorded in that persistent data store,
by distributing cryptographic objects to key use entities of said network according to the respective CO deployment specification,
by updating or refreshing existing cryptographic objects used by key use entities of said network according to the respective CO deployment specification and withdrawing cryptographic objects from key use entities of said network according to the respective deployment specification.

In an embodiment of the system according to the present invention the data store is a persistent data store and comprises data fields for exchanging message information data between the deployment process and the distribution process,
wherein a distribution action data field is provided for denoting a specific action required by the respective CO deployment specification and wherein a distribution status data field is providing for indicating an execution status of the respective CO deployment specification.

In an embodiment of the system according to the present invention said distribution action data field of the persistent data store indicates an action type comprising a hold action which informs the distribution process to skip the respective CO deployment as the CO deployment specification is not ready,
a deploy action which indicates a requirement ready to deploy,
an update action which indicates that the CO deployment specification is modified and to instruct the distribution process to refresh the CO deployment by executing the corresponding deployment related operations again, and
a withdraw type which indicates that an existing CO deployment is to be withdrawn by the distribution process.

In an embodiment of the system according to the present invention the distribution status data field of the persistent data store indicates an execution status comprising an init status which indicates that the respective CO deployment specification is waiting for being executed by the distribution process,
a running status which indicates that the respective CO deployment specification is currently executed by the distribution process,
a done status which indicates that the CO deployment has been successfully executed by the distribution process according to the corresponding CO deployment specification and try-again status which indicates that the execution of the CO deployment has been attempted by the distribution process at least once but has not been finished successfully.

In an embodiment of the system according to the present invention the cryptographic objects comprise
cryptographic keys including private keys, public keys, symmetric secret keys and key pairs, cryptographic certificates signed by a key or certificate authority,
cryptographic secret data and
user credentials.

In an embodiment of the system according to the present invention the CO deployment specification for a cryptographic object comprises
a CO deployment specification including
at least one deployment source,
at least one deployment destination,
at least one CO deployment pattern specifying the distribution of cryptographic object from sources to destinations,
said deployment specification further comprising
one or more CO attributes of said cryptographic object in particular timing attributes.

In an embodiment of the system according to the present invention the key use entity consumes cryptographic objects, said key use entity comprising a node in a network or an application running on a node of a network.

Another aspect of the present invention further provides a data network comprising
network entities which consume cryptographic objects distributed by a distribution manager which executes deployment related operations in a distribution process to distribute the cryptographic objects to the entities in response to CO deployment specifications recorded in a data store by a deployment manager in a deployment process,
wherein the distribution process and the deployment process are performed independently and asynchronously.

Another aspect of the invention provides a method for performing a deployment lifecycle management of cryptographic objects comprising the steps of:
providing at least one CO deployment specification for cryptographic objects in a deployment process and
executing the deployment related operations in response to the provided CO deployment specification in a distribution process,
wherein the deployment process and the distribution process are performed independently in an asynchronous manner.

Another aspect of the invention provides a data carrier comprising instructions for performing such a method.

In the following possible embodiments of the system and method according to the present invention are described with reference to the enclosed figures.
- Fig. 1: shows a block diagram for illustrating a possible embodiment of a system for deployment lifecycle management according to the present invention;
- Fig. 2: shows a diagram for illustrating a possible embodiment of a method for performing a deployment lifecycle management of cryptographic objects according to the present invention;
- Fig. 3: shows a state diagram for illustrating a possible embodiment of the system method for a lifecycle management according to the present invention.

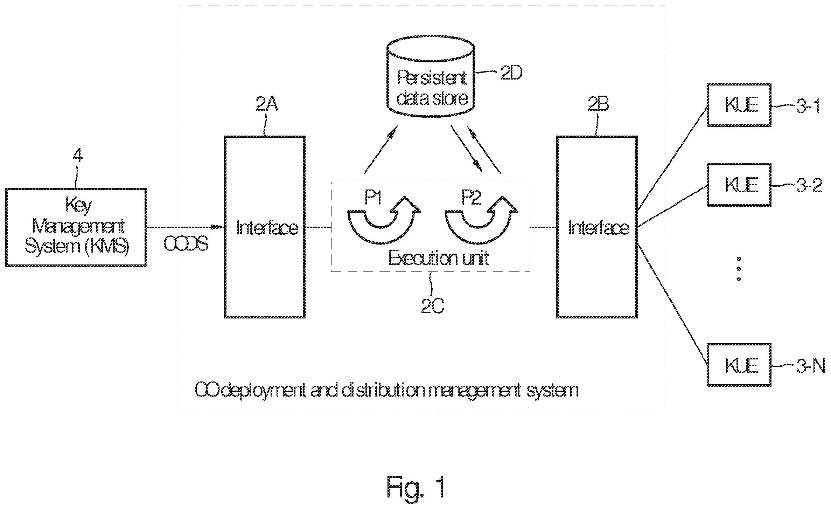

As can be seen from Fig. 1 a system 1 for a deployment lifecycle management comprises in a possible embodiment a distribution management unit 2 having an interface 2A for receiving CO deployment specifications (CODS) and an interface 2B for distributing cryptographic objects CO. The distribution management unit 2 comprises at least one execution unit 2C such as a microprocessor for running or executing processes. In a possible embodiment the distribution management unit 2 further comprises at least one persistent data store 2D for recording CO deployment specifications CODS. The interface 2A is provided for receiving at least one CO deployment specification CODS which indicates a deployment of one or more cryptographic objects CO to one or more key use entities 3-1, 3-2, 3-3, 3-N as shown in Fig. 1. The key use entities 3-i consume each one or several cryptographic objects CO. The key use entity 3-i can be in a possible embodiment be a node of a network such as a data network. In an alternative embodiment the key use entity 3-i can be an application running on a node of a network. Each node of the network can comprise several applications each forming a key use entity consuming one or several cryptographic objects CO.

The distribution management unit 2 receives via its interface 2A at least one CO deployment specification CODS from a key management system 4. In an alternative embodiment the distribution management system can receive an CO deployment specification CODS as an input from a user. The CO deployment specification CODS indicates the deployment of one or more cryptographic objects CO to one or more key use entities 3-i according to a predetermined mapping pattern.

In a possible embodiment each CO deployment specification CODS can comprise an indication for adding of a cryptographic object CO to a key use entity 3-i or for deleting a cryptographic object from a key use entity 3-i of a network. Furthermore, the CO deployment specification CODS can comprise in a possible embodiment an indication for transmitting a cryptographic object CO to a key use entity 3-i of a network in response to an application requirement. In a possible embodiment the CO deployment specification CODS can comprise furthermore an indication for updating an existing cryptographic object CO used by a key use entity 3-i or for updating one of the attributes of the respective cryptographic object CO.

Each cryptographic object CO can comprise one or several keys such as private keys, public keys, symmetric or asymmetric keys as well as key pairs. The cryptographic object CO can also be formed by a cryptographic certificate signed by key certificate authority. The cryptographic object can also be formed by cryptographic secret data or by user credentials of a user.

In a possible embodiment the CO deployment specification CODS provided for a cryptographic object CO comprises an CO deployment specification. This CO deployment specification can comprise in a possible embodiment at least one CO deployment source, at least one CO deployment destination and at least one CO deployment pattern specifying the distribution of cryptographic objects CO from object sources to object destinations. In a possible embodiment the deployment specification can further comprise one or more CO attributes of the respective cryptographic objects. These object attributes can comprise timing attributes.

The execution unit 2C can execute several processes at the same time. In the system according to the present invention the execution unit 2C runs asynchronously a deployment process P1 for providing CO deployment specifications CODS for cryptographic objects CO and a distribution process P2 for executing deployment related operations in response to CO deployment specifications CODS recorded in the persistent data store 2D. The distribution process P2 and the deployment process P1 are performed independently in an asynchronous manner. Both processes P1, P2 are decoupled and work asynchronously.

The deployment process P1 run on the execution unit 2C can comprise in a possible embodiment a validation of a received CO deployment specification CODS against a predetermined security policy. Furthermore the deployment process P1 can update a deployment specification object attribute or can perform a withdrawal of a CODS. The actual withdrawal of a CO from a KUE is done by the distribution process.

In an embodiment the distribution process P2 which can be executed on the same or a different execution unit 2C of the distribution management unit 2 comprises the execution of each validated CO deployment specification CODS recorded in the persistent data store 2D. This is performed by distributing cryptographic objects CO to the key use entity 3-i of the network according to the respective CO deployment specification CODS, by updating or refreshing existing cryptographic objects used by the key use entities 3-i of the network according to the respective CO deployment specification CODS and by withdrawing cryptographic objects CO from key use entities 3-i of the network according to the respective deployment specification.

The data store 2D is a persistent data store and comprises several data fields allowing the two independently running processes P1, P2 to communicate with each other. Accordingly, the persistent data store 2D comprises data fields for exchanging message information data between the deployment process P1 and the distribution process P2. In a possible embodiment a distribution action data field is provided for denoting a specific action required by the respective CO deployment specification CODS. Furthermore, a distribution status data field is provided for indicating an execution status of the respective CO deployment specification CODS.

In a possible embodiment the distribution action data field of the persistent data store 2D indicates an action type. This action type can comprise a hold action which informs the distribution process P2 to skip the respective CO deployment as the CO deployment specification CODS is not ready. The action type can further comprise a deploy action which indicates a requirement ready to deploy. Furthermore, the action type can comprise an update action which indicates that the CO deployment specification CODS is modified and to instruct the distribution process P2 to refresh the CO deployment by executing the corresponding deployment related operations again. Furthermore, the action type can comprise a withdraw type which indicates that an existing CO deployment is to be withdrawn by the distribution process P2.

Besides the distribution action data field indicating an action type the persistent data store 2D can comprise the distribution status data field indicating an execution status. This execution status can comprise an inert or init status which indicates that the respective CO deployment specification CODS is waiting for being executed by the distribution process P2. The execution status can further comprise a running status which indicates that the respective CO deployment specification CODS is currently executed by the distribution process P2. Furthermore the execution status can comprise a done status which indicates that the CO deployment has been successfully executed by the distribution process P2 according to the corresponding CO deployment specification CODS. Furthermore the execution status can comprise a try again status which indicates that the execution of the CO deployment has been attempted by the distribution process P2 at least once but has not been finished successfully.

The method and system according to the present invention separate the task of specifying deployment requirements from the distribution task, namely the task of actual execution of deployment related operations so that the distribution task can be completely automated without human intervention. The first process refers to as the deployment process P1 which can be devoted to interacting with the administrator or security officer through a user interface and receiving and validating the deployment requirements such as deploying one or more cryptographic keys or certificates to one or more end points such as key use entities 3-i according to a specific pattern, updating deployment specific attributes, withdrawing a deployment etc. Validated deployment specifications are then recorded in the persistent data store 2D.

The second process P2 refers to the distribution process which forms a process responsible for the actual executing of deployment specifications that are stored in the persistent data store 2D. The distribution process P2 is responsible for actions such as distributing cryptographic keys or certificates to endpoints such as key use entities 3-i, updating an existing deployment such as refreshing a key or certificate and withdrawing cryptographic keys or certificates from endpoints such as key use entities. The message passing between the two processes P1, P2 is performed through the persistent data store 2D in which records and status of deployment specifications can be stored and accessed by both processes P1, P2.

The key management system is provided to enable organisations using cryptography to manage a risk and meet regulatory requirements, to provide lifetime management of cryptographic keys K and of digital certificates C across a plurality of applications and thousands of servers, end users and network devices. A complete life cycle for deployment and distribution of cryptographic objects CO comprises a validation, execution, update and withdrawal of cryptographic objects.

A challenge for managing the lifecycle of cryptographic CO deployment and distribution is that specifying a valid deployment requirement meeting the application does not violate at the same time a security policy. The actual distribution of a cryptographic object CO such as a key K to remote network endpoints or delete a key at a remote endpoint can be a lengthy process keeping an administrator waiting for a complete confirmation in a conventional system. The method and system according to the present invention in contrast offers a asynchronous deployment and distribution breaking down the conventional sequential chain into two independent processes P1, P2 working asynchronously. The task of specifying deployment requirements is separated from the task of actual executing deployment related operations by the system according to the present invention. Consequently the actual execution of deployment related operations can be performed without human intervention. The first process P1 is devoted to interacting with administrator through a user interface to receiving deployment requirements such as deploying one or more cryptographic objects CO to one or more endpoints according to a specific pattern. Furthermore, deployment specific attributes can be modified, expired keys or certificates can be refreshed involving a deployment specification. Furthermore, it is possible to withdraw an existing deployment. The CO deployment specifications CODS can be generated automatically by other components of the system. For example when a lifecycle managing engine of the KMS decides to expire a cryptographic key or certificate all the deployments involving this key or certificate will have to be withdrawn accordingly. This results in appropriate deployment specification created automatically rather than manually. In a possible embodiment an CO deployment specification CODS entered by an administrator is not accepted until it is validated against a predetermined security policy. Only validated deployment specifications CODS are then recorded in the persistent data store 2D indicating that they are ready for actual execution. The process is referred to as the deployment process P1.

The other process P2 which is responsible for actual execution of the accepted deployment specification that is stored in the persistent data store 2D is the distribution process P2. This process P2 is responsible for actions such as distributing keys or certificates to endpoints 3-i, modifying deployment related attributes of an existing deployment, refreshing expired keys or certificates involved in a deployment and finally withdrawing keys K or certificates C from endpoints or key use entities 3-i as shown in Fig. 1.

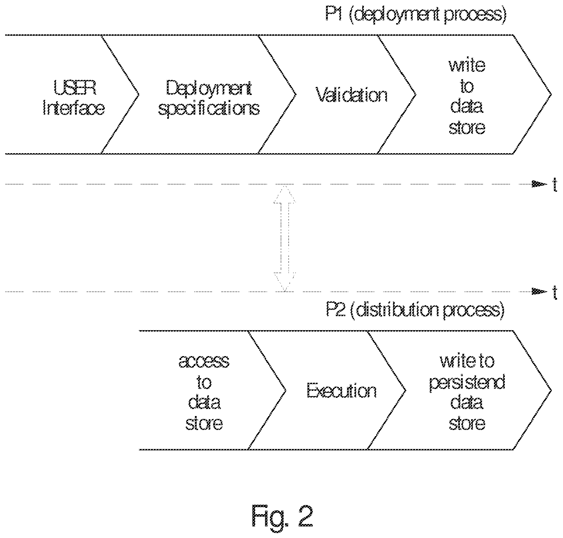

Both processes P1, P2 communicate with each other through the persistent data store 2D in which the status of deployment specifications is kept. There are two possible embodiments to make the distribution process P2 aware of any CO deployment specification CODS not being executed yet. In one embodiment a deployment process P1 informs the distribution process P2 that new deployment specifications are coming. In an alternative embodiment the distribution process P2 periodically checks the status of CO deployment specifications CODS in the persistent data store 2D and then takes actions accordingly. Both variants can be used to trigger the execution of CO deployment specifications CODS. The decoupled processes P1, P2 of asynchronous deployment and distribution to coordinate the lifecycle management of key certificates deployment and distribution are illustrated in Fig. 2.

In a possible embodiment the CO deployment specification CODS stored in the persistent data store 2D can use two fields to exchange information between the deployment process P1 and the distribution process P2. The first data field is the distribution action data field and the second data field is the distribution status data field. The distribution action data field can take values from the following four action types: hold, deploy, update, withdraw. The distribution status data field can represent the execution status of the deployment specification and can comprise the following four states: init, running, done, try again.

The distribution action data field is primarily used by the deployment process P1 to communicate with the distribution process P2 regarding which operations the deployment specification anticipates. The distribution status data field is used for the distribution process to process step by step the actual execution of a CO deployment specification CODS. The above-mentioned states in both the distribution action data field and the distribution status data field can be extended to achieve a finer control over the distribution process.

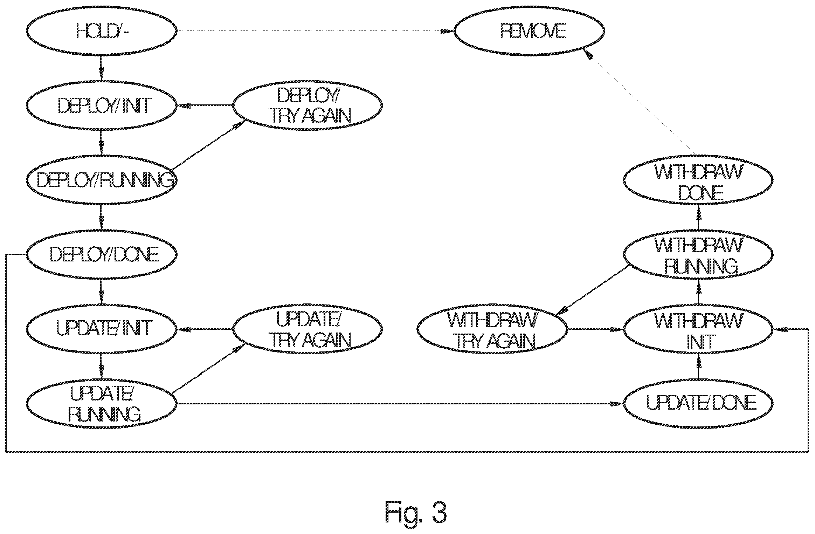

The lifecycle of a deployment is modelled as a combination of the distribution action data field and the distribution status data field as shown in Fig. 3.

The shown state transitions are exemplary to illustrate how a distribution process handles a deployment specification in the persistent data store 2D. In case the distribution process finishes a deployment specification with failure it marks it as "try again" and there is a background scheduling mechanism to change the status from "try again" to "init". The distribution process attempts then to execute it again. In a possible embodiment an administrator can query the status of any deployment specification by looking up the status field and take appropriate actions.

In a possible embodiment the present invention can be used in a data network. This data network can comprise network entities which consume cryptographic objects CO distributed by a distribution manager such as a distribution management unit 2 shown in Fig. 1. This distribution management unit 2 executes deployment related operations in a distribution process P2 to distribute the cryptographic objects CO to the network entities 3 in response to CO deployment specifications CODS recorded in a data store 2D by the distribution management unit 2 in a deployment process P1. The distribution process P2 and the deployment process P1 are performed independently in an asynchronous manner.

The method for performing a deployment lifecycle management of cryptographic objects CO can comprise the steps of providing at least one CO deployment specification CODS for a cryptographic object CO in a deployment process P1 and executing the deployment related operations in response to the provided CO deployment specifications CODS in a distribution process P2, wherein the deployment process P1 and the distribution process P2 are performed independently in an asynchronous manner.

This method can be performed by a computer program comprising instructions for performing the method. This computer program can be stored on a data carrier and be loaded to computer or server. Key use entities 3-i as shown in Fig. 1 can be any kind of nodes or devices provided in a network in particular in data network. The key use entities 3-i can consume any kind of cryptographic keys or certificates or credentials or secret data. The entities 3-i shown in Fig. 1 can communicate with each other via communication lines or networks or wireless. The persistent data store 2D can be integrated in the distribution management unit 2 as shown in Fig. 1 but can also be accessed by the execution unit 2C via a network. The key use entities 3-i can be mobile or immobile nodes of a data network. In a possible embodiment the distribution management unit 2 is integrated in the key management system 4 as shown in Fig. 1. The distribution management unit 2 can comprise a user interface for an administrator or an operator.

## Claims

1. A system (1) for cryptographic objects (CO) deployment life-cycle management comprising:
at least one execution unit (2C) for running asynchronously
a deployment process (P1) for providing deployment specifications (CODS) for cryptographic objects (CO) and
a distribution process (P2) for executing distribution-related operations in response to deployment specifications (CODS) recorded in a persistent data store (2D), and
an interface (2A) for receiving deployment specifications (CODS), wherein each deployment specification indicates a deployment of one or more cryptographic objects (CO) to one or more key-use entities (3) of a network,
wherein,
said deployment process (P1) run on said execution unit (2C) comprises a validation of deployment specifications (CODS) received via said interface (2A) against a predetermined security policy, and
said distribution process (P2) run on said execution unit (2C) comprises execution of each validated deployment specification (CODS) recorded in said persistent data store (2D)
by distributing cryptographic objects (CO) to key use entities (3) of the network according to a respective deployment specification (CODS),
by updating or refreshing existing cryptographic objects (CO) used by key use entities (3) of the network according to a respective deployment specification (CODS) and
by withdrawing cryptographic objects (CO) from key use entities (3) of the network according to a respective deployment specification (CODS).

2. The system according to claim 1,
wherein said deployment specification (CODS) comprises:
an indication for adding of a cryptographic object (CO) to a key use entity (3) or for deleting a cryptographic object (CO) from a key use entity (3) of said network;
an indication for transmitting a cryptographic object (CO) to a key use entity (3) of the network in response to an application requirement; or
an indication for updating an existing cryptographic object (CO) used by a key use entity (3) or for updating one of the attributes of said cryptographic object (CO).

3. The system according to claim 1 or 2,
wherein said deployment specification (CODS) is provided by a key management system (4) or input by a user into said system (1) for deployment life-cycle management.

4. The system according to claims 1 to 3,
wherein said data store comprises
data fields for exchanging message information data between said deployment process (P1) and said distribution process (P2),
wherein a distribution action data field is provided for denoting a specific action required by the respective deployment specification (CODS) and wherein a distribution status data field is provided for indicating an execution status of the respective deployment specification (CODS).

5. The system according to claim 4,
wherein said distribution action data field of said persistent data store (2D) indicates an action type comprising
a hold action which informs said distribution process (P2) to skip the respective deployment as the deployment specification (CODS) is not ready,
a deploy action which indicates a requirement ready to deploy,
an update action which indicates that the deployment specification (CODS) is modified and to instruct the distribution process (P2) to refresh the deployment by executing the corresponding deployment related operations again, and
a withdrawal action which indicates that an existing deployment is to be withdrawn by said distribution process (P2).

6. The system according to claim 4 or 5,
wherein said distribution status data field of said persistent data store (2D) indicates an execution status comprising
an init status which indicates that the respective deployment specification (CODS) is waiting for being executed by said distribution process (P2),
a running status which indicates that the respective deployment specification (CODS) is currently executed by said distribution process (P2),
a done status which indicates that the deployment has been successfully executed by said distribution process (P2) according to the corresponding deployment specification (CODS) and
a try-again status which indicates that the execution of the deployment has been attempted by said distribution process (P2) at least once but has not been finished successfully.

7. The system according to claims 1 to 6,
wherein said cryptographic objects (CO) comprise
cryptographic keys (K) including private keys, public keys, symmetric secret keys and key pairs,
cryptographic certificates signed by a key of a certificate authority (CA),
cryptographic secret data and
user credentials.

8. The system according to claims 1 to 7,
wherein said deployment specification (CODS) for a cryptographic object (CO) comprises
an deployment specification including
at least one deployment source, that is, one or more COs
at least one deployment destination, that is, one or more key-use-entities (3)
at least one deployment pattern specifying the distribution of cryptographic objects (CO) from sources to destinations,
said deployment specification further comprising
one or more object attributes of said cryptographic object (CO), in particular timing attributes.

9. The system according to claims 1 to 8,
wherein said key-use-entity (3) consumes cryptographic objects,
said key-use-entity (3) comprising a node in a network or an application running on a node of a network.

10. A method for performing a deployment life-cycle management of cryptographic objects (CO) comprising the steps of:
receiving, via an interface (2A), deployment specifications (CODS), wherein each deployment specification indicates a deployment of one or more cryptographic objects (CO) to one or more key-use entities (3) of a network;
providing deployment specifications (CODS), wherein providing comprises validating deployment specifications received via said interface (2A) against a predetermined security policy in a deployment process (P1), whereby validated deployment specifications are recorded in a persistent data store (2D); and
executing deployment-related operations in response to said provided deployment specification (CODS) in a distribution process (P2),
wherein,
the deployment process (P1) and the distribution process (P2) are run on an execution unit (2C) and are performed independently in an asynchronous manner,
and wherein,
said distribution process (P2) run on said execution unit (2C) comprises execution of each validated deployment specification (CODS) recorded in said persistent data store (2D)
by distributing cryptographic objects (CO) to key use entities (3) of the network according to a respective deployment specification (CODS),
by updating or refreshing existing cryptographic objects (CO) used by key use entities (3) of the network according to a respective deployment specification (CODS) and
by withdrawing cryptographic objects (CO) from key use entities (3) of the network according to a respective deployment specification (CODS).

11. A data carrier comprising instructions for performing the method according to claim 10.

## Patentansprüche

1. System (1) für ein Verwalten des Implementierungs-Lebenszyklus (deployment life cycle) von kryptographischen Objekten (CO), wobei das System umfasst:
mindestens eine Ausführungseinheit (2C) zum asynchronen Ausführen eines Implementierungsprozesses (P1), um Implementierungsspezifikationen (CODS) für kryptographische Objekte (CO) bereitzustellen, und eines Verteilprozesses (P2), um verteilbezogene Operationen in Reaktion auf die Implementierungsspezifikationen (CODS) auszuführen, die in einem permanenten Datenspeicher (2D) aufgezeichnet sind, und
eine Schnittstelle (2A) zum Empfangen von Implementierungsspezifikationen (CODS), wobei jede Implementierungsspezifikation ein Implementieren eines oder mehrerer kryptographischer Objekte (CO) an eine oder mehrere schlüsselverwendende Entitäten (3) eines Netzwerks angibt, wobei
der Implementierungsprozess (P1), der auf der Ausführungseinheit (2C) ausgeführt wird, einen Prüfvergleich der über die Schnittstelle (2A) empfangenen Implementierungsspezifikationen (CODS) mit einer vorgegebenen Sicherheitsstrategie umfasst, und
der Verteilprozess (P2), der auf der Ausführungseinheit (2C) ausgeführt wird, ein Ausführen jeder geprüften Implementierungsspezifikation (CODS) umfasst, die in dem permanenten Speicher (2D) aufgezeichnet ist,
durch Verteilen der kryptographischen Objekte (CO) an die schlüsselverwendenden Entitäten (3) des Netzwerks gemäß einer jeweiligen Implementierungsspezifikation (CODS),
durch Aktualisieren oder Auffrischen vorhandener kryptographischer Objekte (CO), die von den schlüsselverwendenden Entitäten (3) des Netzwerks gemäß einer jeweiligen Implementierungsspezifikation (CODS) verwendet werden und
durch Rücknehmen von kryptographischen Objekten (CO) von den schlüsselverwendenden Entitäten (3) des Netzwerks gemäß einer jeweiligen Implementierungsspezifikation (CODS).

2. System nach Anspruch 1, wobei die Implementierungsspezifikation (CODS) umfasst:
eine Angabe zum Hinzufügen eines kryptographischen Objekts (CO) zu einer schlüsselverwendenden Entität (3) oder zum Löschen eines kryptographischen Objekts (CO) von einer schlüsselverwendenden Entität (3) des Netzwerks;
eine Angabe zum Übertragen eines kryptographischen Objekts (CO) an eine schlüsselverwendende Entität (3) des Netzwerks in Reaktion auf eine Anwendungsanforderung; oder
eine Angabe zum Aktualisieren eines vorhandenen kryptographischen Objekts (CO), das von einer schlüsselverwendenden Entität (3) verwendet wird oder zum Aktualisieren eines der Attribute des kryptographischen Objekts (CO).

3. System nach Anspruch 1 oder 2,
wobei die Implementierungsspezifikation (CODS) durch ein Schlüssel-Verwaltungssystem (4) oder eine Nutzereingabe in das System (1) zum Implementieren der Lebenszyklus-Verwaltung bereitgestellt wird.

4. System nach den Ansprüchen 1 bis 3,
wobei der Datenspeicher
Datenfelder zum Austauschen von Nachrichtendaten zwischen dem Implementierungsprozess (P1) und dem Verteilprozess (P2) umfasst,
wobei ein Verteilaktions-Datenfeld zum Kennzeichnen einer bestimmten Aktion bereitgestellt wird, die aufgrund der jeweiligen Implementierungsspezifikation (CODS) verlangt wird, und wobei ein Verteilzustand-Datenfeld zum Angeben eines Ausführungszustands der jeweiligen Implementierungsspezifikation (CODS) bereitgestellt wird.

5. System nach Anspruch 4,
wobei das Verteilaktions-Datenfeld des permanenten Datenspeichers (2D) eine Aktionsart angibt, die eine Halteaktion umfasst, die den Verteilprozess (P2) informiert, dass die jeweilige Implementierung zu überspringen ist, wenn die Implementierungsspezifikation (CODS) noch nicht bereitsteht, eine Implementierungsaktion, die anzeigt, dass eine Anforderung umsetzbar ist,
eine Aktualisierungsaktion, die angibt, dass die Implementierungsspezifikation (CODS) verändert wurde und den Verteilprozess (P2) anweist, die Implementierung durch erneutes Ausführen der zugehörigen implementierungsrelevanten Operationen zu aktualisieren, und
eine Rücknahmeaktion umfasst, die angibt, dass eine vorhandene Implementierung durch den Verteilprozess (P2) zurückgenommen wird.

6. System nach Anspruch 4 oder 5,
wobei das Verteilzustand-Datenfeld des permanenten Speichers (2D) einen Implementierungszustand anzeigt, der umfasst:
einen Anfangszustand, der angibt, dass die jeweilige Implementierungsspezifikation (CODS) darauf wartet, durch den Verteilprozess (P2) ausgeführt zu werden,
einen Implementierungszustand, der anzeigt, dass die jeweilige Implementierungsspezifikation (CODS) momentan durch den Verteilprozess (P2) ausgeführt wird,
einen Erledigt-Zustand, der angibt, dass das Implementieren erfolgreich durch den Verteilprozess (P2) gemäß den zugehörigen Implementierungsspezifikationen (CODS) ausgeführt wurde, und
einen Neuversuchszustand, der anzeigt, dass das Ausführen der Implementierung durch den Verteilprozess (P2) mindestens einmal versucht, aber nicht erfolgreich beendet wurde.

7. System nach den Ansprüchen 1 bis 6,
wobei die kryptographischen Objekte (CO) kryptographische Schlüssel (K) mit privaten Schlüsseln, öffentlichen Schlüsseln, symmetrischen Geheimschlüsseln und Schlüsselpaaren,
kryptographische Zertifikate, die mit einem Schlüssel einer Zertifikatsbehörde (CA) signiert sind,
kryptographische Geheimdaten und Nutzer-Anmeldedaten umfassen.

8. System nach den Ansprüchen 1 bis 7,
wobei die Implementierungsspezifikation (CODS) für ein kryptographisches Objekt (CO) umfasst:
eine Implementierungsspezifikation, die beinhaltet:
mindestens eine Implementierungsquelle, d.h. ein oder mehrere COs,
mindestens ein Implementierungsziel, d.h. eine oder mehrere schlüsselverwendende Entitäten (3),
mindestens ein Implementierungsmuster, das das Verteilen der kryptographischen Objekte (CO) von Quellen an Ziele festlegt,
wobei die Implementierungsspezifikation ferner ein oder mehrere Attribute der kryptographischen Objekte, insbesondere Zeitsteuerungsattribute umfasst.

9. System nach den Ansprüchen 1 bis 8,
wobei die schlüsselverwendende Entität (3) kryptographische Objekte in Anspruch nimmt,
die schlüsselverwendende Entität (3) einen Knoten in einem Netzwerk oder eine Anwendung umfasst, die auf einem Knoten eines Netzwerks ausgeführt wird.

10. Verfahren zum Ausführen einer Verwaltung des Implementierungs-Lebenszyklus von kryptographischen Objekten (CO), wobei das Verfahren die Schritte umfasst:
Empfangen von Implementierungsspezifikationen (CODS) über eine Schnittstelle (2A), wobei jede Implementierungsspezifikation eine Implementierung ein oder mehrerer kryptographischer Objekte (CO) für eine oder mehrere schlüsselverwendende Entitäten (3) eines Netzwerks anzeigt;
Bereitstellen von Implementierungsspezifikationen (CODS), wobei das Bereitstellen einen Prüfvergleich von Implementierungsspezifikationen, die über die Schnittstelle (2A) empfangen wurden, mit einer vorgegebenen Sicherheitsstrategie in einem Implementierungsprozess (P1) umfasst, wobei die geprüften Implementierungsspezifikationen in einem permanenten Datenspeicher (2D) aufgezeichnet werden; und
Ausführen von implementierungsrelevanten Operationen in Reaktion auf die bereitgestellte Implementierungsspezifikation (CODS) in einem Verteilprozess (P2), wobei
der Implementierungsprozess (P1) und der Verteilprozess (P2) auf einer Ausführungseinheit (2C) und unabhängig voneinander asynchron ausgeführt werden, und wobei
der Verteilprozess (P2), der auf der Ausführungseinheit (2C) ausgeführt wird, ein Ausführen jeder geprüften Implementierungsspezifikation (CODS) umfasst, die in dem permanenten Datenspeicher (2D) aufgezeichnet sind
durch Verteilen von kryptographischen Objekten (CO) an die schlüsselverwendenden Entitäten (3) des Netzwerks gemäß der jeweiligen Implementierungsspezifikation (CODS),
durch Aktualisieren oder Auffrischen von vorhandenen kryptographischen Objekten (CO), die von den schlüsselverwendenden Entitäten (3) des Netzwerks gemäß einer jeweiligen Implementierungsspezifikation (CODS) verwendet werden und
durch Rücknehmen von kryptographischen Objekten (CO) von den schlüsselverwendenden Entitäten (3) des Netzwerks gemäß einer jeweiligen Implementierungsspezifikation (CODS).

11. Datenträger, der Anweisungen zum Ausführen des Verfahrens nach Anspruch 10 umfasst.

## Revendications

1. Système (1) de gestion de cycle de vie du déploiement d'objets cryptographiques (CO), le système comprenant :
au moins une unité d'exécution (2C) pour exécuter de manière asynchrone
un processus de déploiement (P1) pour fournir des spécifications de déploiement (CODS) pour des objets cryptographiques (CO) et
un processus de distribution (P2) pour exécuter les opérations relatives à la distribution en réponse aux spécifications de déploiement (CODS) enregistrées dans un magasin de données persistantes (2D) et
une interface (2A) pour recevoir des spécifications de déploiement (CODS), dans lequel chaque spécification de déploiement indique un déploiement d'un ou plusieurs objets cryptographiques (CO) vers une ou plusieurs entités d'utilisation de clé (3) d'un réseau,
dans lequel
ledit processus de déploiement (P1) exécuté sur ladite unité d'exécution (2C) comprend une validation des spécifications de déploiement (CODS) reçues via ladite interface (2A) par rapport à une politique de sécurité prédéterminée, et
ledit processus de distribution (P2) exécuté sur ladite unité d'exécution (2C) comprend l'exécution de chaque spécification de déploiement validée (CODS) enregistrée dans ledit magasin de données persistantes (2D),
en distribuant des objets cryptographiques (CO) vers des entités d'utilisation de clé (3) du réseau selon une spécification de déploiement respective (CODS),
en mettant à jour ou rafraîchissant des objets cryptographiques existants (CO) utilisés par les entités d'utilisation de clé (3) du réseau selon une spécification de déploiement respective (CODS) et
en extrayant des objets cryptographiques (CO) des entités d'utilisation de clé (3) du réseau selon une spécification de déploiement respective (CODS).

2. Système selon la revendication 1, dans lequel ladite spécification de déploiement (CODS) comprend :
une indication pour ajouter un objet cryptographique (CO) à une entité d'utilisation de clé (3) ou supprimer un objet cryptographique (CO) d'une entité d'utilisation de clé (3) dudit réseau ;
une indication pour transmettre un objet cryptographique (CO) à une entité d'utilisation de clé (3) du réseau en réponse à une exigence d'application ; ou
une indication pour mettre à jour un objet cryptographique existant (CO) utilisé par une entité d'utilisation de clé (3) ou pour mettre à jour un des attribut dudit objet cryptographique (CO).

3. Système selon la revendication 1 ou 2,
dans lequel ladite spécification de déploiement (CODS) est fournie par un système de gestion de clé (4) ou entrée par un utilisateur dans le système (1) de gestion de cycle de vie du déploiement.

4. Système selon les revendications 1 à 3,
dans lequel ledit magasin de données comprend des champs de données pour échanger des données d'information de message entre ledit processus de déploiement (P1) et ledit processus de distribution (P2), dans lequel un champ de données d'action de distribution est prévu pour dénoter une action spécifique exigée par la spécification de déploiement respective (CODS) et dans lequel un champ de données de statut de distribution est prévu pour indiquer un statut d'exécution de la spécification de déploiement respective (CODS).

5. Système selon la revendication 4, dans lequel ledit champ de données d'action de distribution dudit magasin de données persistantes (2D) indique un type d'action comprenant
une action de retenue qui informe ledit processus de distribution (P2) d'omettre le déploiement respectif lorsque la spécification de déploiement (CODS) n'est pas prête,
une action de déploiement qui indique une exigence prête à déployer,
une action de mise à jour qui indique que la spécification de déploiement (CODS) est modifiée et donne instruction au processus de distribution (P2) de rafraîchir le déploiement en exécutant à nouveau les opérations relatives au déploiement correspondantes, et
une action d'extraction qui indique qu'un déploiement existant doit être extrait par ledit processus de distribution (P2).

6. Système selon la revendication 4 ou 5, dans lequel ledit champ de données de statut de distribution dudit magasin de données persistantes indique un statut d'exécution comprenant
un statut d'initialisation qui indique que la spécification de déploiement spécifique (CODS) attend d'être exécutée par ledit processus de distribution (P2),
un statut d'exécution qui indique que la spécification de déploiement respective (CODS) est actuellement exécutée par ledit processus de distribution (P2),
un statut effectué qui indique que le déploiement a été exécuté avec succès par ledit processus de distribution (P2) conformément à la spécification de déploiement correspondante (CODS) et
un statut de ré-essai qui indique que l'exécution du déploiement a été tentée par ledit processus de distribution (P2) au moins une fois mais n'a pas pris fin avec succès.

7. Système selon les revendications 1 à 6,
dans lequel lesdits objets cryptographiques (CO) comprennent des clés cryptographiques (K) incluant des clés privées, clés publiques, clés secrètes symétriques et paires de clés,
des certificats cryptographiques signés par une clé d'une autorité de certification (CA), des données secrètes cryptographiques et des identifiants d'utilisateur.

8. Système selon les revendications 1 à 7,
dans lequel ladite spécification de déploiement (CODS) pour un objet cryptographique (CO) comprend
une spécification de déploiement incluant
au moins une source de déploiement, c'est-à-dire un ou plusieurs COs,
au moins une destination de déploiement, c'est-à-dire une ou plusieurs entités d'utilisation de clé (3),
au moins un modèle de déploiement spécifiant la distribution d'objets cryptographiques (CO) des sources aux destinations,
ladite spécification de déploiement comprenant en outre
un ou plusieurs attributs d'objets dudit objet cryptographique (CO), en particulier des attributs de temporisation.

9. Système selon les revendications 1 à 8,
dans lequel ladite entité d'utilisation de clé (3) consomme des objets cryptographiques,
ladite entité d'utilisation de clé (3) comprenant un noeud dans un réseau ou une application s'exécutant sur un noeud d'un réseau.

10. Procédé pour effectuer une gestion de cycle de vie du déploiement d'objets cryptographiques (CO) comprenant les étapes consistant à :
recevoir, via une interface (2A), des spécifications de déploiement (CODS), chaque spécification de déploiement indiquant un déploiement d'un ou plusieurs objets cryptographiques (CO) vers une ou plusieurs entités d'utilisation de clé (3) d'un réseau ;
fournir des spécifications de déploiement (CODS), la fourniture comprenant de valider les spécifications de déploiement reçues via ladite interface (2A) par rapport à une politique de sécurité prédéterminée dans un processus de déploiement (P1), moyennant quoi les spécifications de déploiement validées sont enregistrées dans un magasin de données persistantes (2D) ; et
exécuter des opérations relatives au déploiement en réponse à ladite spécification de déploiement fournie (CODS) dans un processus de distribution (P2),
dans lequel
le processus de déploiement (P1) et le processus de distribution (P2) sont exécutés sur une unité d'exécution (2C) et sont effectués indépendamment d'une manière asynchrone et dans lequel
ledit processus de distribution (P2) exécuté sur ladite unité d'exécution (2C) comprend l'exécution de chaque spécification de déploiement validée (CODS) enregistrée dans ledit magasin de données persistantes (2D),
en distribuant des objets cryptographiques (CO) vers des entités d'utilisation de clé (3) du réseau selon une spécification de déploiement respective (CODS),
en mettant à jour ou rafraîchissant des objets cryptographiques existants (CO) utilisés par les entités d'utilisation de clé (3) du réseau selon une spécification de déploiement respective (CODS) et
en extrayant des objets cryptographiques (CO) des entités d'utilisation de clé (3) du réseau selon une spécification de déploiement respective (CODS).

11. Support de données comprenant des instructions pour mettre en oeuvre le procédé selon la revendication 10.
